# EUROPÄISCHE PATENTSCHRIFT

(11) **EP 3 303 837 B1**
(45) Veröffentlichungstag und Bekanntmachung des Hinweises auf die Patenterteilung: **12.06.2019**
(21) Anmeldenummer: 16719331.7
(22) Anmeldetag: 18.04.2016
(51) Int. Cl.: F04B 5/00, F04B 17/04

(54) **PUMPENEINRICHTUNG, BREMSSYSTEM**
PUMP DEVICE, BRAKE SYSTEM
DISPOSITIF DE POMPAGE, SYSTÈME DE FREINAGE

(30) Priorität: 27.05.2015 DE 102015209728
(43) Veröffentlichungstag der Anmeldung: 11.04.2018
(73) Patentinhaber: Robert Bosch GmbH, 70442 Stuttgart (DE)
(72) Erfinder: ESCHER, Guenter, 87561 Oberstdorf (DE); STRANSKY, Gerhard, 87509 Immenstadt (DE); FERGUSON, Ben, 87549 Rettenberg (DE); KRATZER, Dietmar, 71732 Tamm (DE); MAYER, Franz, 87490 Haldenwang (DE); SPECKER, Michael, 87544 Blaichach (DE); ACHILLES, Stefan, 87509 Immenstadt / Stein (DE); LUTZ, Bernd, 87437 Kempten (DE); SCHACHERL, Alice, 87545 Burgberg (DE); PAWELETZ, Anton, 70736 Fellbach (DE); BAMBERGER, Hermann, 87509 Immenstadt (DE); HELLER, Roland, 87509 Immenstadt (DE)
(86) Internationale Anmeldenummer: PCT/EP2016/058485
(87) Internationale Veröffentlichungsnummer: WO 2016/188672

(56) Entgegenhaltungen:
- EP-A1- 1 553 292
- CH-A5- 630 443
- DE-A1- 19 546 682
- DE-A1-102006 060 147
- DE-U1-202007 019 534
- DE-U1-202011 108 107
- US-A- 2 497 300
- US-A1- 2011 020 143

## Beschreibung

Die Erfindung betrifft eine Pumpeneinrichtung, insbesondere für ein Bremssystem eines Kraftfahrzeugs, mit einem Linearantrieb, der als Reluktanzantrieb ausgebildet ist und dazu einen längsbeweglichen Anker und einen gehäusefesten, bestrombaren Stator beziehungsweise einen Stator mit bestrombarer Spule aufweist, wobei dem Anker mindestens ein Federelement zugeordnet ist, das einer Antriebskraft des Reluktanzantriebs entgegenwirkt, und wobei der Anker mit mindestens einem Pumpenkolben verbunden ist.

Ferner betrifft die Erfindung ein Bremssystem mit einer derartigen Pumpeneinrichtung.

### Stand der Technik

Grundsätzlich ist es bereits bekannt, in hydraulischen Bremssystemen von Kraftfahrzeugen eine Pumpeneinrichtung vorzusehen, die bei Bedarf einen Hydraulikdruck in dem Bremssystem erhöht, um einen automatischen Bremsvorgang, beispielsweise einen Notbremsvorgang, unabhängig von einer Bremspedalbetätigung des Fahrers durchzuführen. Üblicherweise weisen bekannte Pumpeneinrichtungen eine Kolbenpumpe auf, die von einem Elektromotor angetrieben wird, sodass eine Rotationsbewegung in eine Translationsbewegung umgewandelt wird. Der Entfall reibungsbehafter Umwandlung der Rotation des Motors in eine oszillierende Kolbenbewegung führt dazu, dass ein besserer Wirkungsgrad und eine kompakte Bauweise der Pumpeneinrichtung gewährleistet werden. Die Kolbenbewegung kann durch Veränderung ihrer Amplitude und Frequenz unabhängig voneinander angesteuert werden. Diese zwei Freiheitsgrade in der Ansteuerung ermöglichen günstige Betriebsbereiche. Als vorteilhafte Weiterentwicklung hat sich die Ausbildung des Linearantriebs als Reluktanzantrieb ergeben, der einfach, genau ansteuerbar und kostengünstig realisierbar ist. Der Reluktanzlinearantrieb weist einen längsbeweglichen Anker und ein gehäusefesten, bestrombaren Stator auf. Wird der Stator bestromt, so wird ein magnetisches Feld erzeugt, das dazu führt, dass der Anker in eine neutrale Position gedrängt wird, in welcher der magnetische Wiederstand für den magnetischen Fluss des Magnetkreises minimal ist. Mindestens ein Federelement ist dabei dem Anker zugeordnet, welches den Anker entgegen dieser Antriebskraft des Reluktanzantriebs beaufschlagt, um den Anker aus der neutralen Position heraus zu bewegen. Wird der Stator also nicht bestromt, drängt das Federelement den Anker aus der neutralen Position heraus in eine Ausgangslage. Wird der Stator wieder bestromt, so drängt er den Anker magnetisch entgegen der Kraft des Federelements in die neutrale Position. Durch eine entsprechende Ansteuerung beziehungsweise Bestromung des Stators lässt sich somit der Hub und die Frequenz der Bewegung des Ankers unabhängig voneinander einstellen. Der Anker ist dabei mit einem Pumpenkolben verbunden, der beispielsweise in einer Hydraulikkammer axial verschieblich gelagert ist, um das dort befindliche Medium zu pumpen.

Aus der Offenlegungsschrift EP 1 553 292 A1 ist beispielsweise bereits eine Pumpe mit einem elektromagnetischen Linearantrieb bekannt, welche zwei unterschiedliche Hydraulikkreise betreibt. Aus der Offenlegungsschrift DE 10 2006 060 147 A1 ist eine weitere Pumpeneinrichtung bekannt, bei welcher ein Linearmotor ausgebildet ist, um einen Kolben hin- und her zu bewegen. Aus der Offenlegungsschrift US 2011/020143 A1 ist eine ähnliche Pumpeneinrichtung bekannt. Aus der Offenlegungsschrift CH 630 443 A5 ist bereits eine Pumpeneinrichtung mit einem Pumpenkolben bekannt, der in zwei Bewegungsrichtungen eine Arbeit verrichtet. Weiterhin ist aus der Gebrauchsmusterschrift DE 20 2011108 107 U1 eine Pumpeneinrichtung mit einem Stufenkolben zum Betreiben mehrerer Flüssigkeitskreisläufe bekannt, wobei der Pumpenkolben durch einen Exzenterantrieb mechanisch entgegen der Kraft eines Federelements verlagert wird.

### Offenbarung der Erfindung

Die erfindungsgemäße Pumpeneinrichtung mit den Merkmalen des Anspruchs 1 hat den Vorteil, dass die Pumpeneinrichtung ein höheres Fördervolumen als bisher gewährleistet und die Möglichkeit bereitstellt, auch zwei voneinander im Wesentlichen unabhängige Hydraulikkreise mit einem Hydraulikdruck beaufschlagen. Hierzu ist erfindungsgemäß vorgesehen, dass die Pumpeneinrichtung jeweils mindestens zwei Fluidanschlüsse aufweisende Hydraulikkammern aufweist, mit denen der Pumpenkolben zusammenwirkt. Die Erfindung sieht also vor, dass der Pumpenkolben nicht mit nur einer Hydraulikkammer, sondern mit zwei Hydraulikkammern zusammenwirkt, die jeweils zwei Fluidanschlüsse, insbesondere jeweils einen Einlass und einen Auslass, aufweisen. Jede der Hydraulikkammern kann dabei einem eigenen Hydraulikkreis zugeordnet sein, da durch Betätigen des Linearantriebs beide Hydraulikkammern mit einem Hydraulikdruck durch den Pumpenkolben zum Durchführen eines Pumpvorgangs beaufschlagt werden können. Hierdurch wird auf einfache und kostengünstige Art und Weise die Leistung der Pumpeneinrichtung erhöht.

Gemäß einer bevorzugten Weiterbildung der Erfindung ist vorgesehen, dass der Pumpenkolben als Doppelkolben ausgebildet ist, der zwei Kolben aufweist, die jeweils einer der Hydraulikkammern zugeordnet sind. Der Pumpenkolben weist also zwei einzelne Kolben beziehungsweise Kolbenanteile auf, die jeweils in einer der Hydraulikkammern wirken beziehungsweise verlagerbar angeordnet sind. Die Hydraulikkammern werden insbesondere durch ein Gehäuse der Pumpeneinrichtung gebildet, wobei auch die Fluidanschlüsse der Hydraulikkammern in dem Gehäuse ausgebildet oder angeordnet sind. Dadurch, dass der Pumpenkolben zwei Kolben aufweist, ist es auf einfache Art und Weise möglich, zwei Hydraulikkammern mit der Antriebskraft des Linearantriebs zu beaufschlagen. Optional kann die Pumpeneinrichtung auch wenigstens eine dritte Hydraulikkammer mit einem entsprechenden dritten Kolben des Pumpenkolbens aufweisen.

Gemäß einer Ausführungsform der Erfindung ist bevorzugt vorgesehen, dass die Kolben des Pumpenkolbens und die Hydraulikkammern parallel nebeneinander angeordnet sind. Dazu sind die Kolben parallel und beabstandet zueinander durch den Linearantrieb in der jeweiligen Hydraulikkammer verlagerbar angeordnet. Dadurch lässt sich eine eindeutige und sichere Trennung der Hydraulikkreise beziehungsweise der Hydraulikkammern voneinander gewährleisten.

Bevorzugt sind die Kolben mechanisch mit dem Anker fest verbunden, sodass die Kolben mit dem Anker direkt mitbewegt werden. Besonders bevorzugt ist vorgesehen, dass der Anker selbst den Pumpenkolben bildet, sodass die Kolben einstückig mit dem Anker ausgebildet sind. Hierdurch ergibt sich eine sichere und belastbare Ausbildung der Pumpeneinrichtung, insbesondere des Pumpenkolbens. Der Pumpenkolben beziehungsweise Anker weist dabei zweckmäßigerweise einen im Wesentlichen Y-förmigen Längsschnitt auf.

Gemäß einer weiteren Ausführungsform der Erfindung ist bevorzugt vorgesehen, dass die Kolben hydraulisch mit dem Anker verbunden sind. Der Doppelkolben wird somit von zwei mechanisch voneinander getrennten Kolben gebildet, die hydraulisch mit dem Anker verbunden sind, wobei der Anker selbst einen Antriebskolben beziehungsweise Pumpenvorkolben zum hydraulischen Antreiben der Kolben bildet. Hierbei ist insbesondere vorgesehen, dass der Anker in eine Hydraulikkammer hineinragt oder durch den Linearantrieb hineinschiebbar ist, um das dort befindliche Hydraulikmedium mit Hydraulikdruck zu beaufschlagen. Diese Hydraulikvorkammer ist hydraulisch mit den Hydraulikkammern, in welchen die Kolben verlagerbar angeordnet sind, verbunden, sodass der in der Hydraulikvorkammer eingestellte Hydraulikdruck auf die Kolben übertragen wird, um in der jeweiligen Hydraulikkammer einen Hydraulikdruck für den jeweiligen Bremskreis/Hydraulikkreis zu erzeugen. Zweckmäßigerweise sind die Kolben dabei jeweils entgegen der Kraft eines Federelements verlagerbar, welches die Kolben zurück in ihre Ausgangsposition drängt. Durch dieses Zurückdrängen wird das Hydraulikmedium zwischen den Kolben und den Vorkolben mit einem Druck beaufschlagt, welcher den Vorkolben und den Anker zurück in dessen neutrale Position drängt. Zusätzlich kann vorgesehen sein, dass dem Anker ein weiteres Federelement direkt zugeordnet ist, welches zwischen dem Anker und beispielsweise dem Gehäuse der Pumpeneinrichtung wirkt, um den Anker in seine neutrale Position zu verlagern.

Gemäß einer bevorzugten Weiterbildung der Erfindung ist vorgesehen, dass die Kolben und die Hydraulikkammern in Bewegungsrichtung der Kolben hintereinander angeordnet sind. Dadurch ergibt sich eine besonders kompakte Bauform der Pumpeneinrichtung insbesondere in Bezug auf den Bauraumbedarf der Pumpeneinrichtung radial zur Bewegungsachse des Pumpenkolbens beziehungsweise des Ankers. Die Hydraulikkammern und die Kolben können dabei direkt hintereinander oder axial beabstandet zueinander ausgebildet sein. Zur hydraulischen Trennung der hintereinanderliegenden Hydraulikkammern ist insbesondere vorgesehen, dass die Kolben an ihrer Mantelaußenwand jeweils wenigstens ein sich für den gesamten Umfang des jeweiligen Kolbens erstreckendes Dichtelement aufweisen, das mit der Innenseite der durch das Gehäuse der Pumpeneinrichtung jeweils gebildeten Hydraulikkammer dichtend zusammenwirkt.

Weiterhin ist bevorzugt vorgesehen, dass der Doppelkolben als Stufenkolben ausgebildet ist. Dadurch weisen die hintereinanderliegenden Kolben unterschiedliche Durchmesser auf. Insbesondere ist vorgesehen, dass ein erster der Kolben am freien Ende des Pumpenkolbens einen kleineren Durchmesser aufweist, als der beabstandet zu dem freien Ende angeordnete zweite Kolben des Pumpenkolbens. Entsprechend der Dimensionierung der Kolben weisen auch die Hydraulikkammern unterschiedliche Durchmesser auf, wobei die Hydraulikkammern in dem Gehäuse der Pumpeneinrichtung als Stufenkammern, insbesondere als Stufenbohrungen ausgebildet sind.

Wie bereits erwähnt ist bevorzugt vorgesehen, dass die Hydraulikkammern und/oder die Fluidanschlüsse in einem Pumpengehäuse der Pumpeneinrichtung ausgebildet sind. Insbesondere sind die Hydraulikkammern und/oder die Fluidanschlüsse als Bohrungen in dem Pumpengehäuse ausgebildet, sodass die Pumpeneinrichtung hohen Belastungen, insbesondere hohen Hydraulikdrücken, standhält.

Gemäß einer bevorzugten Weiterbildung der Erfindung ist außerdem vorgesehen, dass die Hydraulikkammern und/oder die Fluidanschlüsse in einem in dem Pumpengehäuse angeordneten Einsatzteil der Pumpeneinrichtung ausgebildet sind. Das Pumpengehäuse ist insofern insbesondere mehrteilig ausgebildet, wobei der Teil, der die Hydraulikkammern und/oder die Fluidanschlüsse aufweist, als Einsatzteil ausgebildet ist. Hierdurch können die Herstellungskosten für die Pumpeneinrichtung reduziert werden, weil das Einsatzteil und das Pumpengehäuse getrennt voneinander gefertigt werden können, wodurch beispielsweise auf kostengünstige Bearbeitungs-/Herstellungsverfahren zurückgegriffen werden kann.

Weiterhin ist bevorzugt vorgesehen, dass zumindest einem der Fluidanschlüsse eine Ventileinrichtung, insbesondere ein Rückschlagventil, zugeordnet ist. Die Ventileinrichtung ist bevorzugt integriert in das Pumpengehäuse der Pumpeneinrichtung angeordnet oder ausgebildet. Vorteilhafterweise ist jedem Fluidanschluss jeweils eine Ventileinrichtung zugeordnet, die entweder als betätigbare Ventileinrichtung zum Freigeben oder Verschließen eines Durchströmungsquerschnitts des jeweiligen Fluidanschlusses ausgebildet ist, oder die als Rückschlagventil ausgebildet ist, um automatisch ein Verschließen des jeweiligen Fluidanschlusses in Abhängigkeit von Druckverhältnissen über das Rückschlagventil freizugeben oder zu verschließen.

Das erfindungsgemäße Bremssystem mit den Merkmalen des Anspruchs 11 zeichnet dadurch aus, dass die Pumpeneinrichtung erfindungsgemäß ausgebildet ist. Es ergeben sich hierdurch die bereits genannten Vorteile. Weitere Merkmale und Vorteile ergeben sich aus dem zuvor Beschriebenen sowie aus den Ansprüchen.

Im Folgenden soll die Erfindung anhand der Zeichnung näher erläutert werden. Dazu zeigen
- Figur 1: ein erstes Ausführungsbeispiel einer Pumpeneinrichtung,
- Figur 2: ein zweites Ausführungsbeispiel der Pumpeneinrichtung,
- Figur 3: ein drittes Ausführungsbeispiel der Pumpeneinrichtung,
- Figuren 4A und 4B: ein viertes Ausführungsbeispiel der Pumpeneinrichtung,
- Figur 5: ein fünftes Ausführungsbeispiel der Pumpeneinrichtung und
- Figur 6: ein sechstes Ausführungsbeispiel der Pumpeneinrichtung, jeweils in einer vereinfachten Schnittdarstellung.

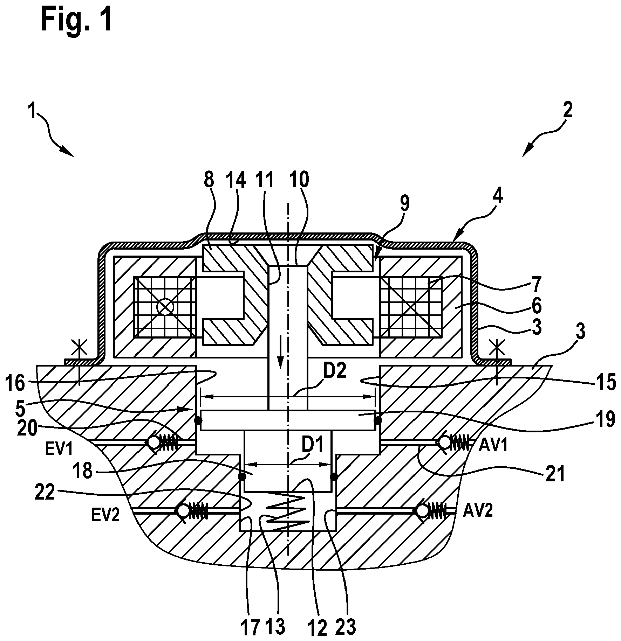

Figur 1 zeigt in einer vereinfachten Schnittdarstellung ein erstes Ausführungsbeispiel einer Pumpeneinrichtung 1 für ein hier nicht näher dargestelltes Bremssystem 2 eines Kraftfahrzeugs.

Die Pumpeneinrichtung 1 weist ein Pumpengehäuse 3 auf, in welchem ein Linearantrieb 4 sowie ein von dem Linearantrieb 4 antreibbarer Pumpenkolben 5 angeordnet sind.

Der Linearantrieb 4 ist als Reluktanzlinearantrieb beziehungsweise Reluktanzantrieb ausgebildet und weist dazu einen gehäusefesten Stator 6 mit einer bestrombaren Wicklung 7 sowie einen ferromagnetischen Anker 8 auf. Der Anker 8 ist axial verlagerbar und insbesondere rotationssymmetrisch ausgebildet. Der Stator 6 umgibt den Anker 8 radial, wobei ein Arbeitsluftspalt 9 zwischen dem Anker 8 und dem Stator 6 verbleibt.

Der Anker 8 ist fest mit dem Pumpenkolben 5 verbunden. Dazu ist ein erstes Ende 10 des Pumpenkolbens 5, das dem Linearantrieb 4 zugeordnet ist, in einer Aufnahmeöffnung 11 des Ankers 8 mittig verpresst gehalten. Dabei ist es auch denkbar, Anker 8 und Pumpenkolben 5 einstückig auszubilden oder durch Verschweißen, Verschrauben und/oder Verkleben miteinander sicher zu verbinden.

An dem von dem ersten Ende 10 abweisenden zweiten Ende 12 des Pumpenkolbens 5 ist ein Federelement 13 angeordnet, das vorliegend als Schraubenfeder ausgebildet und zwischen dem Pumpengehäuse 3 und dem freien Ende 12 des Pumpenkolbens 5 vorgespannt gehalten ist, sodass es den Pumpenkolben 5 in Richtung des Stators 6 drängt. Dabei drängt das Federelement 13 den Pumpenkolben 5 insbesondere bis zu einem Anschlag 14 des Pumpengehäuses 3. Liegt der Anker 8 an dem Anschlag 14 an, so überlappen sich Anker 8 und Stator 6 nur bereichsweise. Der Stator 6 ist komplementär zu dem Anker 8 ausgebildet. Das bedeutet, dass zumindest eine lineare Ankerlage des Ankers 8 gegenüber dem Stator 6 eine Position einnehmbar ist, bei der der magnetische Wiederstand für den durch eine Bestromung der Wicklung 7 erzeugten magnetischen Flusses minimal ist. Insbesondere, wie vorliegend dargestellt, sind die zylindrischen Flächen von Stator 6 und Anker 8 im Bereich des Arbeitsluftspalts 9 axial gleich lang ausgebildet. Dadurch ergibt sich im Betrieb eine Position des Ankers 8, bei der die resultierende axiale Kraft bei einer Bestromung des Stators 6 gleich Null ist, nämlich dann, wenn Anker 8 und Stator 6 auf gleicher Höhe angeordnet sind. Diese Position wird auch im Folgenden als neutrale Position bezeichnet werden. Das Federelement 13 drängt den Anker 8 aus der neutralen Position hinaus gegen den Anschlag 14, wie in Figur 1 gezeigt. Wird die Spule 7 also bestromt, wird eine Antriebskraft erzeugt, durch welche der Anker 8 zusammen mit dem Pumpenkolben 5 entgegen der Kraft des Federelements 13 bewegt wird, bis der Anker 8 die neutrale Position erreicht.

Das Pumpengehäuse 3 weist weiterhin eine Stufenbohrung 15 auf, wobei eine erste Stufe der Bohrung einen Durchmesser aufweist, der zumindest dem Außendurchmesser des Ankers 8 entspricht und an den Linearantrieb 4 angrenzt, und wobei eine zweite Stufe der Stufenbohrung 15 einen im Vergleich zu der ersten Stufe verringerten Durchmesser aufweist. Die Stufen der Stufenbohrungen bilden dabei eine erste Hydraulikkammer 16 und eine zweite Hydraulikkammer 17.

Der Pumpenkolben 5 ist als Stufenkolben ausgebildet und stellt somit einen Doppelkolben dar. Dabei weist der Pumpenkolben 5 an seinem freien Ende 12 einen ersten Kolben 18 mit einem ersten Durchmesser D1 auf. Beabstandet zu dem freien Ende 12 weist der Pumpenkolben 5 weiterhin einen zweiten Kolben 19 auf, dessen Außendurchmesser D2 größer ist als der Außendurchmesser D1. Dabei ist vorgesehen, dass der Durchmesser D1 im Wesentlichen dem Innendurchmesser der Hydraulikkammer 17 und der Durchmesser D2 im Wesentlichen dem Innendurchmesser der Hydraulikkammer 16 entspricht, wobei der erste Kolben 18 der Hydraulikkammer 17 und der zweite Kolben 19 in der Hydraulikkammer 16 verschiebbar angeordnet ist, und wobei der jeweilige Kolben 18, 19 die jeweilige Hydraulikkammer 16, 17 begrenzt, sodass durch ein Verfahren des Pumpenkolbens das Volumen der jeweiligen Hydraulikkammer 16, 17 veränderbar ist.

Jeder Hydraulikkammer 16, 17 sind außerdem zwei Fluidanschlüsse 20, 21 beziehungsweise 22, 23 zugeordnet. Jedem Fluidanschluss 20 bis 23 ist weiterhin jeweils ein Rückschlagventil EV1, AV1, EV2 beziehungsweise AV2 zugeordnet. Die Rückschlagventile EV1 und EV2 öffnen dabei in Richtung der jeweiligen Hydraulikkammer 16 beziehungsweise 17, während die Rückschlagventile AV1 und AV2 in Richtung der jeweiligen Hydraulikkammer 16, 17 schließen. Damit bilden die Rückschlagventile EV1 und EV2 Einlassventile und die Rückschlagventile AV1 und AV2 Auslassventile für die jeweilige Hydraulikkammer 16 beziehungsweise 17. Damit ist jedem Fluidanschluss 20 bis 23 jeweils eine Ventileinrichtung zugeordnet, die selbsttätig ausgebildet ist, um in Abhängigkeit von einer Druckdifferenz über das jeweilige Rückschlagventil den jeweiligen Fluidanschluss 20 bis 23 freizugeben oder zu verschließen. Dadurch erfolgt ein Pumpen automatisch durch eine Ansteuerung des Linearantriebs 4.

Wird die Spule 7 ausgehend von dem in Figur 1 dargestellten Zustand bestromt, so wird der Anker 8 zusammen mit dem Pumpenkolben 5 in Richtung des Federelements 13 verlagert, wie durch einen Pfeil angedeutet. Dabei erhöht der Kolben 19 den Druck in der Hydraulikkammer 16 und der Kolben 18 den Druck in der Hydraulikkammer 17, bis das jeweilige Auslassventil AV1, AV2 automatisch öffnet und in das Hydraulikmedium aus der jeweiligen Hydraulikkammer 16, 17 durch den jeweiligen Fluidanschluss 21, 23 entweichen kann. Die Hydraulikkammern 16, 17 sind dabei unterschiedlichen Hydraulikkreisen, insbesondere Bremskreisen, des Bremssystems 2 zugeordnet.

Die Spule 7 wird aus einer Spannungsquelle mittels einer Leistungselektronik versorgt und angesteuert. Durch die Größe der Spannungsamplitude der Spannungsversorgung und die durch die Leistungselektronik bestimmte Bestromungsdauer wird sowohl die Auslenkungsamplitude, also der Hub des Ankers 8, als auch seine Bewegungsfrequenz bestimmt. Vorzugsweise wird die Frequenz in der Nähe der mechanischen Eigenfrequenz des Ankers 8 gewählt. Im Betrieb der Pumpeneinrichtung 1 wird bevorzugt die Neutralposition des Ankers nicht erreicht. In der Regel wird der Statorstrom vor Erreichen dieser Position ausgeschaltet. Hierdurch wird der Hub des Ankers 8 in Abhängigkeit von der potentiellen Energie des Federelements 13 gesteuert. Durch die Einstellung des Stroms ist der Volumenstrom der Pumpeneinrichtung 1 bei einem gegebenen Druck aus der Hochdruckseite der Pumpe gesteuert und geregelt.

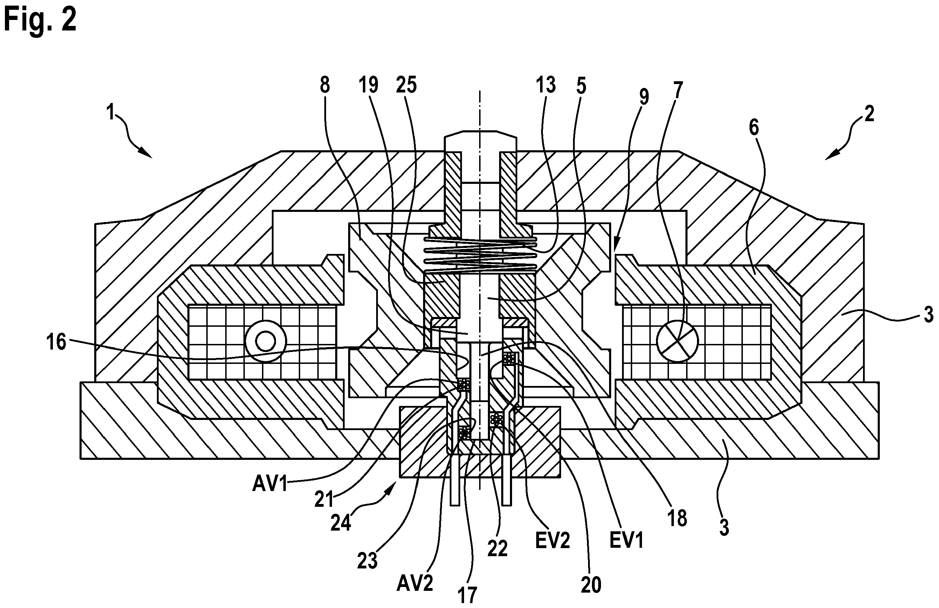

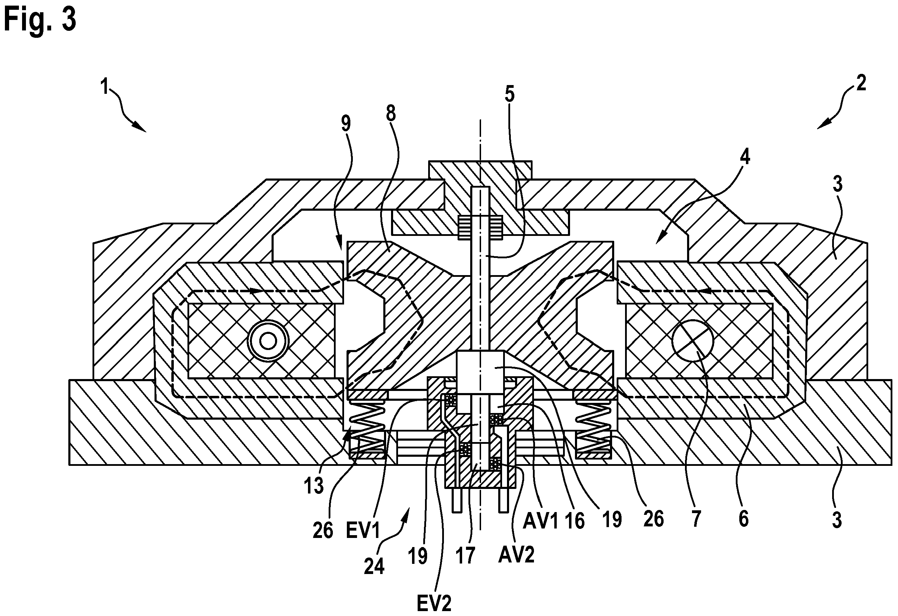

Figur 2 zeigt ein zweites Ausführungsbeispiel der Pumpeneinrichtung 1, wobei aus Figur 1 bereits bekannte Elemente mit den gleichen Bezugszeichen versehen sind und insofern auf die oben stehende Beschreibung verwiesen wird. Dies gilt auch für die in Figuren 3 bis 6 beschriebenen Ausführungsbeispiele. Im Folgenden soll im Wesentlichen nur auf die Unterschiede zwischen den Ausführungsbeispielen eingegangen werden.

Das zweite Ausführungsbeispiel unterscheidet sich von dem ersten Ausführungsbeispiel im Wesentlichen dadurch, dass das Pumpengehäuse ein separates Einsatzteil 24 aufweist, das in das Gehäuse 3 eingesetzt ist und die Hydraulikkammern 16, 17 bildet. Durch das Vorsehen der Hydraulikkammer 16, 17 mittels eines separaten Einsatzteils 24 wird erreicht, dass die Herstellungskosten für die Pumpeneinrichtung 1, insbesondere für das Pumpengehäuse 3 reduziert werden können. Weiterhin unterscheidet sich das zweite Ausführungsbeispiel von dem ersten Ausführungsbeispiel dadurch, dass das Federelement 13 nicht dem freien Ende 12 des Pumpenkolbens 5 zugeordnet ist, sondern dem freien Ende 10, das in diesem Fall von der den Hydraulikkammern 16, 17 abgewandten Seite des Ankers 8 vorsteht. Darüber hinaus ist das Federelement zwischen dem Anker 8 beziehungsweise einem Ankerträger 25, der fest mit dem Anker 8 verbunden ist, und dem Gehäuse 3 gehalten, wobei in diesem Fall das Federelement 13 als vorgespannte Zugfeder ausgebildet ist. Der Betrieb der Pumpeneinrichtung 1 gemäß dem zweiten Ausführungsbeispiel erfolgt wie zuvor beschrieben.

Die Pumpeneinrichtung 1 gemäß einem dritten Ausführungsbeispiel, das in Figur 3 gezeigt ist, unterscheidet sich von dem vorhergehenden Ausführungsbeispiel dadurch, dass das Federelement mit der den Hydraulikkammern 16, 17 zugewandten Seite des Ankers 8 zusammenwirkt. Dazu ist das Federelement 13 zwischen dem Anker 8 und dem Gehäuse 3 auf der Seite der Hydraulikkammern 16, 17 beziehungsweise des Einsatzteils 25 vorgespannt gehalten und als Druckfeder ausgebildet. Das Federelement 13 kann dabei durch eine konzentrisch zu der Bewegungsachse des Pumpenkolbens 5 angeordnete Schraubenfeder ausgebildet sein. Alternativ, wie in Figur 3 gezeigt, können auch mehrere einzelne Schraubenfendern 26 vorgesehen sein, die gleichmäßig über den Umfang des Ankers 8 verteilt angeordnet und zwischen dem Anker 8 und dem Gehäuse 3 wie zuvor beschrieben vorgespannt gehalten sind, um den Anker 8 aus der neutralen Position heraus in die Ausgangsposition zu verlagern. Durch gestrichelte Pfeile ist in Figur 3 außerdem der Magnetfluss bei bestromtem Stator 9 angedeutet. Diese Variante der Pumpeneinrichtung 1 erlaubt einen kompakteren Aufbau der Pumpeneinrichtung und ermöglicht mehr Freiräume für die Dimensionierung des Magnetkreises.

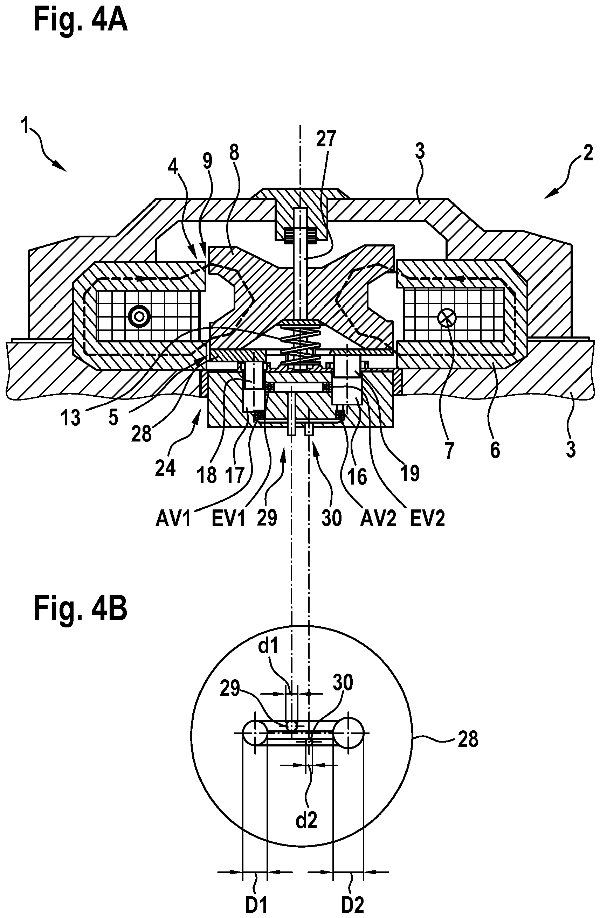

Figuren 4A und 4B zeigen ein viertes Ausführungsbeispiel der Pumpeneinrichtung 1 in einer Längsschnittdarstellung (Figur 4A) und in einer Unteransicht (Figur 4B). Im Unterschied zu dem vorhergehenden Ausführungsbespiel sind nunmehr die Kolben 18 und 19 nebeneinander und parallel zueinander angeordnet. Der Anker 8 ist entlang eines feststehenden Führungsbolzens 27 in dem Gehäuse 3, wie zuvor beschrieben, verschiebbar gelagert. Dabei ist zwischen dem Anker 8 und dem Gehäuse 3 das Federelement 13 als Druckfeder vorgespannt gehalten. Der Pumpenkolben 5, der aus nicht-magnetischem Material hergestellt ist, wird vorliegend durch eine an der Unterseite des Ankers 8 anliegende kreisringförmige Scheibe gebildet, die auf der dem Anker 8 gegenüberliegenden Seite die beiden Kolben 18 und 19 trägt. Die Kolben 18, 19 sind dabei einander diametral gegenüberliegend bezüglich der Bewegungsachse des Ankers 8 an der Unterseite der Scheibe 28 angeordnet. Entsprechend sind auch die Hydraulikkammern 16 und 17 nebeneinander in dem Gehäuse 3, beziehungsweise vorliegend in dem Einsatzteil 24 ausgebildet. Durch die unterschiedlichen Durchmesser D1 und D2 der Kolben 18, 19 und einer gegebenenfalls unterschiedlichen Anfangslage (Kolbenhöhe) wird eine vorteilhafte Phasenverschiebung der durch die Kolben 18, 19 erzeugten Druckpulse für den jeweiligen Hydraulikkreis erreicht. Dadurch wird der Druckverlauf auf Druckseite der Pumpeneinrichtung vorteilhaft ausgeglichen und der Inhalt von Oberwellen im Druckverlauf kleiner. In Konsequenz verbessern sich das Schwingungsverhalten und die akustische Anregung, die von der Pumpeneinrichtung 1 ausgehen. Durch eine gezielte Dimensionierung der Durchmesser D1, D2, der Kolbenhübe und der Durchströmungsquerschnitte der Fluidanschlüsse lässt sich die Pumpeneinrichtung 1 auf einfache Art und Weise an unterschiedliche Applikationen anpassen. Durch das Nebeneinanderanordnen der Kolben 18 und 19 sowie der Hydraulikkammern 17 und 16 wird erreicht, dass eine räumliche Trennung der Hydraulikkreise sicher gewährleistet ist. Den Hydraulikkreis können eigene Dichtungen und Lagerungen zugeordnet werden, wodurch die Dichtheit der Pumpeneinrichtung auf lange Zeit gewährleistet ist. Auch hier ist der Pumpenkolben 5 als Doppelkolben ausgebildet.

Figur 4B zeigt in der Draufsicht auf die Unterseite des Einsatzteils 24, wobei die unterschiedlichen Durchmesser D1, D2 der Kolben 18, 19 sowie die Durchmesser d1 eines gemeinsamen Fluideinlasses 29 und d2 eines gemeinsamen Fluidauslasses 30 gezeigt sind. In diesem Fall wird also das Hydraulikmedium aus den Hydraulikkammern 17, 16 einem gemeinsamen Fluidauslass 30 zugeführt oder einem gemeinsamen Fluideinlass 29 entnommen. Alternativ kann vorgesehen sein, wie zuvor bereits erwähnt, dass jeder Hydraulikkammer 16, 17 einem eigenen Hydraulikkreis zugeordnet ist, sodass sich keine gemeinsamen Fluidanschlüsse ergeben.

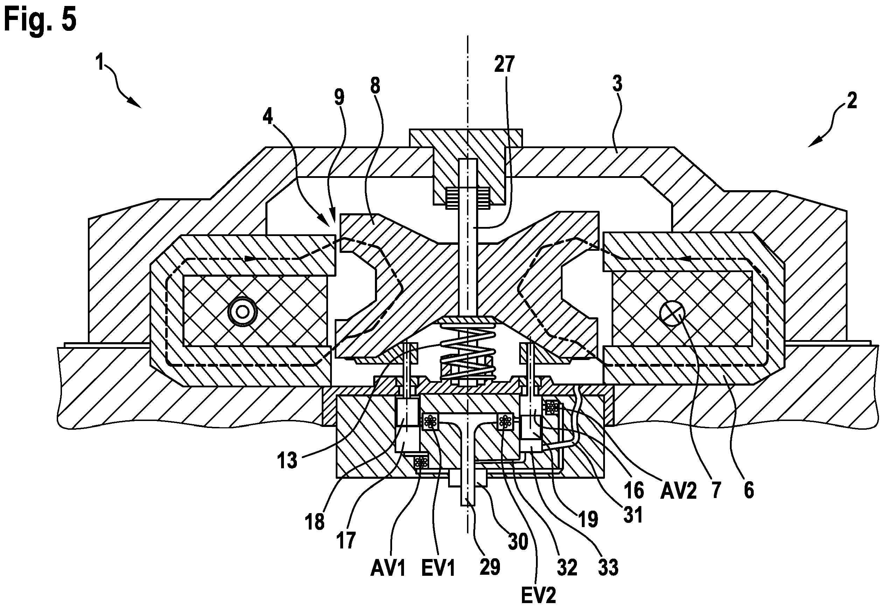

Figur 5 zeigt ein fünftes Ausführungsbeispiel der Pumpeneinrichtung 1, das sich von dem vorhergehenden Ausführungsbeispiel dadurch unterscheidet, dass die gemeinsamen Fluidanschlüsse 29, 30 koaxial zueinander angeordnet sind, wodurch sich eine besonders kompakte Ausführungsform der Pumpeneinrichtung ergibt.

Gemäß diesem Ausführungsbeispiel ist vorgesehen, dass eine der Hydraulikkammern, vorliegend die Hydraulikkammer 16, zwischen dem Anker 8 und dem Kolben 19 angeordnet ist, sodass ein Pumpvorgang in der Hydraulikkammer 16 dann erfolgt, wenn der Kolben 19 durch die Kraft des Federelements 13 in seine Ausgangsposition zurückverlagert wird. Durch diese umgekehrte Ausrichtung beziehungsweise Funktion der beiden Kolben 18, 19 wird eine vorteilhafte Phasenverschiebung der Druckpulse um eine halbe Periode T/2 in beiden Hydraulikkreise/Subsystemen erreicht. Dadurch wird der Druckverlauf auf der Hochdruckseite ausgeglichen und der Inhalt der Oberwellen im Druckverlauf wird weiter reduziert. In Konsequenz dessen verbessern sich das Schwingungsverhalten und die akustische Anregung, die von der Pumpeneinrichtung 1 ausgehen. Das zweite Subsystem im Kolben 19 benötigt jedoch aufgrund der umgekehrten Hydraulikkammer 16 eine Druckausgleichsschaltung. Hierzu ist vorliegend vorgesehen, dass auf der dem Anker abgewandten Seite des Kolbens 19 eine Druckausgleichskammer 33 ausgebildet ist.

Weiterhin ist vorliegend vorgesehen, dass optional eine Druckausgleichsleitung 31 zwischen der Druckausgleichskammer 33 und dem Arbeitsraum des Ankers 8 und/oder eine Druckausgleichsleitung 32 zwischen der Druckausgleichskammer 33 und dem gemeinsamen Fluideinlass 29 ausgebildet ist.

Das Pumpengehäuse 3 ist aus nicht magnetischem Material gefertigt und umfasst alle aktiven Elemente der Pumpeneinrichtung 1 und gewährleistet konstruktiv eine möglichst genaue Zentrizität bei möglichst kleinem Arbeitsluftspalt 9. Dabei sind alle Elemente des Magnetkreises, also Anker 8, Stator 6 und Spule 7 rotationssymmetrisch um die Kolbenachse beziehungsweise Bewegungsachse des Ankers 8 herum angeordnet.

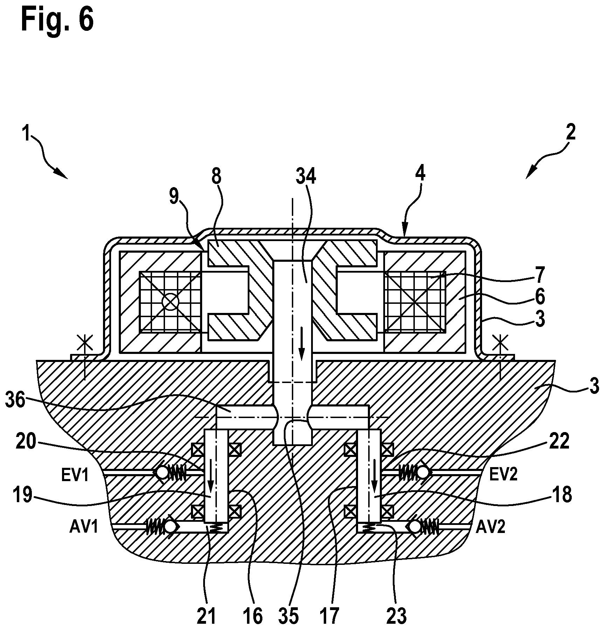

Figur 6 zeigt ein sechstes Ausführungsbeispiel der Pumpeneinrichtung 1, wobei auch hier die Kolben 18, 19 nebeneinander angeordnet sind. Im Unterschied zu den vorhergehenden Ausführungsbeispielen bilden die Kolben 18, 19 jedoch keine mechanische Einheit miteinander. Vielmehr sind die Kolben 18, 19 hydraulisch mit dem Anker 8 beziehungsweise mit einem Pumpenvorkolben, der mit dem Anker 8 fest verbunden ist, wirkverbunden. Der Pumpenvorkolben 34 weist an seinem von dem Anker 8 wegweisenden freien Ende eine Durchmesserverjüngung 35 auf. Mit dieser Durchmesserverjüngung 35 liegt der Pumpenvorkolben 34 in einer Hydraulikvorkammer 36 ein, in welcher ein Hydraulikmedium vorhanden ist. Wird der Pumpenvorkolben 34 durch den Anker 8 mit der Antriebskraft des Linearantriebs 4 beaufschlagt, so wird er derart in die Hydraulikvorkammer 36 eingetrieben, dass durch seinen durch die Bewegung erfolgenden zunehmenden Durchmesser ein Druck in die Hydraulikvorkammer 36 erzeugt wird, der auf die Kolben 18, 19 zu deren Verlagerung wirkt. Die Kolben 18, 19 werden also hydraulisch betätigt. Dabei sind die Kolben 18, 19 wie zuvor beschrieben in jeweils einer der Hydraulikkammern 17, 16 verlagerbar angeordnet, wobei den Hydraulikkammern 16, 17 wie zuvor bereits beschrieben die Fluidanschlüsse 20 bis 23 insbesondere unterschiedlicher Hydraulikkreise zugeordnet sind. Vorzugsweise sind den Kolben 18, 19 jeweils ein Federelement zugeordnet, das der hydraulischen Betätigungskraft entgegenwirkt, sodass die Kolben 18, 19 durch Federkraft in ihre Ausgangslage zurück verbracht werden. Der dadurch erzeugte Hydraulikdruck wirkt außerdem auf den Pumpenvorkolben 34, wodurch dieser gegebenenfalls in seine Ausgangsstellung zurückgedrängt wird. Bevorzugt ist jedoch auch dem Pumpenvorkolben 34 ein Federelement (hier nicht eingezeichnet) zugeordnet, das der Antriebskraft des Linearantriebs 4 entgegenwirkt, sodass der Pumpenkolben stets sicher in seine Ausgangsposition aus der neutralen Stellung heraus verlagert wird, wenn die Spule 7 nicht mehr bestromt wird.

## Patentansprüche

1. Pumpeneinrichtung (1), insbesondere für ein Bremssystem (2) eines Kraftfahrzeugs, mit einem Linearantrieb (4), der als Reluktanzantrieb ausgebildet ist und dazu einen längsbeweglichen Anker (8) und einen gehäusefesten, bestrombaren Stator (6) aufweist, wobei dem Anker (8) mindestens ein Federelement (13) zugeordnet ist, das einer Antriebskraft des Reluktanzantriebs entgegenwirkt, und wobei der Anker (8) mit einem Pumpenkolben (5) verbunden ist, wobei die Pumpeneinrichtung (1) zwei jeweils mindestens zwei Fluidanschlüsse (20-23) aufweisende Hydraulikkammern (16,17) aufweist, mit denen der Pumpenkolben (5) zusammenwirkt, **dadurch gekennzeichnet, dass** der Stator (6) komplementär zu dem Anker (8) ausgebildet ist, sodass zylindrische Flächen von Stator (6) und Anker (8) im Bereich eines dazwischen ausgebildeten Arbeitsluftspalts (9) axial gleich lang sind, und dass eine neutrale Position des Ankers (8) gegenüber dem Stator (6) einnehmbar ist, in welcher Anker (8) und Stator (6) auf gleicher Höhe angeordnet sind, sodass die resultierende axiale Kraft bei einer Bestromung der Winklung (7) gleich null und ein magnetischer Widerstand für einen durch die Bestromung der Wicklung (7) des Stators (6) erzeugten magnetischen Flusses minimal ist.

2. Pumpeneinrichtung nach Anspruch 1, **dadurch gekennzeichnet, dass** der Pumpenkolben (5) als Doppelkolben ausgebildet ist, der zwei Kolben (18,19) aufweist, die jeweils einer der Hydraulikkammern (16,17) zugeordnet sind.

3. Pumpeneinrichtung nach Anspruch 2, **dadurch gekennzeichnet, dass** die Kolben (18,19) und die Hydraulikkammern (16,17) parallel nebeneinander angeordnet sind.

4. Pumpeneinrichtung nach Anspruch 2, **dadurch gekennzeichnet, dass** die Kolben (18,19) mechanisch mit dem Anker (8) verbunden sind.

5. Pumpeneinrichtung nach Anspruch 2, **dadurch gekennzeichnet, dass** die Kolben (18,19) hydraulisch mit dem Anker (8) verbunden sind.

6. Pumpeneinrichtung nach Anspruch 2, **dadurch gekennzeichnet, dass** die Kolben (18,19) und die Hydraulikkammern (16,17) in Bewegungsrichtung der Kolben (18,19) hintereinander angeordnet sind.

7. Pumpeneinrichtung nach Anspruch 2, **dadurch gekennzeichnet, dass** der Doppelkolben als Stufenkolben ausgebildet ist.

8. Pumpeneinrichtung nach einem der vorhergehenden Ansprüche, **dadurch gekennzeichnet, dass** die Hydraulikkammern (16,17) und/oder die Fluidanschlüsse (20-23) in einem Pumpengehäuse (3) der Pumpeneinrichtung (1) ausgebildet/angeordnet sind.

9. Pumpeneinrichtung nach einem der vorhergehenden Ansprüche, **dadurch gekennzeichnet, dass** die Hydraulikkammern (16,17) und/oder die Fluidanschlüsse in einem in dem Pumpengehäuse (3) angeordneten Einsatzteil (24) der Pumpeneinrichtung (1) ausgebildet sind.

10. Pumpeneinrichtung nach einem der vorhergehenden Ansprüche, **dadurch gekennzeichnet, dass** zumindest einem der Fluidanschlüsse (20-23) eine Ventileinrichtung (EV1,EV2,AV1,AV2), insbesondere ein Rückschlagventil, zugeordnet ist.

11. Bremssystem (2), insbesondere für ein Kraftfahrzeug, mit einer Pumpeneinrichtung (1) und mit wenigstens einem mit der Pumpeneinrichtung (1) hydraulisch verbundenen Hydraulikkreis, der jeweils wenigstens eine hydraulisch betätigbare Radbremse aufweist, **gekennzeichnet durch** die Ausbildung der Pumpeneinrichtung (1) nach einem der Ansprüche 1 bis 10.

## Claims

1. Pump device (1), in particular for a brake system (2) of a motor vehicle, having a linear drive (4) which is constructed as a reluctance drive and which to this end has a longitudinally movable armature (8) and a stator (6) which is secured to a housing and to which current can be applied, wherein there is associated with the armature (8) at least one resilient element (13) which counteracts a drive force of the reluctance drive, and wherein the armature (8) is connected to a pump piston (5), wherein the pump device (1) has two hydraulic chambers (16, 17) which each have at least two fluid connections (20-23) and with which the pump piston (5) cooperates, **characterized in that** the stator (6) is of complementary form with respect to the armature (8), such that cylindrical surfaces of the stator (6) and armature (8) are axially of equal length in the region of a working air gap (9) formed in between, and **in that** a neutral position of the armature (8) relative to the stator (6) can be assumed, in which armature (8) and stator (6) are arranged at the same height, such that the resulting axial force in the event of the winding (7) being electrically energized is equal to zero and a magnetic resistance for a magnetic flux generated as a result of the electrical energization of the winding (7) of the stator (6) is minimal.

2. Pump device according to Claim 1, **characterized in that** the pump piston (5) is constructed as a dual piston which has two pistons (18, 19) which are each associated with one of the hydraulic chambers (16, 17), respectively.

3. Pump device according to Claim 2, **characterized in that** the pistons (18, 19) and the hydraulic chambers (16, 17) are arranged in parallel beside each other.

4. Pump device according to one of the preceding claims, **characterized in that** the pistons (18, 19) are mechanically connected to the armature (8).

5. Pump device according to Claim 2, **characterized in that** the pistons (18, 19) are hydraulically connected to the armature (8).

6. Pump device according to Claim 2, **characterized in that** the pistons (18, 19) and the hydraulic chambers (16, 17) are arranged one behind the other in the movement direction of the pistons (18, 19).

7. Pump device according to Claim 2, **characterized in that** the dual piston is constructed as a stepped piston.

8. Pump device according to one of the preceding claims, **characterized in that** the hydraulic chambers (16, 17) and/or the fluid connections (20-23) are constructed/arranged in a pump housing (3) of the pump device (1).

9. Pump device according to one of the preceding claims, **characterized in that** the hydraulic chambers (16, 17) and/or the fluid connections are constructed in an insertion component (24) of the pump device (1), which insertion component is arranged in the pump housing (3).

10. Pump device according to one of the preceding claims, **characterized in that** a valve device (EV1, EV2, AV1, AV2), in particular a non-return valve, is associated with at least one of the fluid connections (20-23) .

11. Brake system (2), in particular for a motor vehicle, having a pump device (1) and having at least one hydraulic circuit which is hydraulically connected to the pump device (1) and which in each case has at least one hydraulically actuatable wheel brake, **characterized by** the construction of the pump device (1) according to one of Claims 1 to 10.

## Revendications

1. Dispositif de pompe (1), en particulier pour un système de frein (2) d'un véhicule automobile, comprenant un entraînement linéaire (4) qui est réalisé sous forme d'entraînement à réluctance et qui présente pour cela un induit (8) déplaçable longitudinalement et un stator (6) pouvant être alimenté en courant, fixé au boîtier, au moins un élément de ressort (13) étant associé à l'induit (8), lequel agit à l'encontre d'une force d'entraînement de l'entraînement à réluctance, et l'induit (8) étant connecté à un piston de pompe (5), le dispositif de pompe (1) présentant deux chambres hydrauliques (16, 17) présentant à chaque fois au moins deux raccords fluidiques (20-23), avec lesquelles le piston de pompe (5) coopère, **caractérisé en ce que** le stator (6) est réalisé de manière complémentaire à l'induit (8), de telle sorte que des surfaces cylindriques du stator (6) et de l'induit (8) dans la région d'un entrefer de travail (9) réalisé entre eux, présentent la même longueur axiale et **en ce qu'**une position neutre de l'induit (8) peut être adoptée par rapport au stator (6), dans laquelle l'induit (8) et le stator (6) sont disposés à la même hauteur, de telle sorte que la force axiale résultante, en cas d'alimentation en courant de l'enroulement (7), soit égale à zéro et qu'une résistance magnétique pour un flux magnétique généré par l'alimentation en courant de l'enroulement (7) du stator (6) soit minimale.

2. Dispositif de pompe selon la revendication 1, **caractérisé en ce que** le piston de pompe (5) est réalisé sous forme de double piston qui présente deux pistons (18, 19) qui sont à chaque fois associés à l'une des chambres hydrauliques (16, 17) .

3. Dispositif de pompe selon la revendication 2, **caractérisé en ce que** les pistons (18, 19) et les chambres hydrauliques (16, 17) sont disposés parallèlement les uns à côté des autres.

4. Dispositif de pompe selon la revendication 2, **caractérisé en ce que** les pistons (18, 19) sont connectés mécaniquement à l'induit (8).

5. Dispositif de pompe selon la revendication 2, **caractérisé en ce que** les pistons (18, 19) sont connectés hydrauliquement à l'induit (8).

6. Dispositif de pompe selon la revendication 2, **caractérisé en ce que** les pistons (18, 19) et les chambres hydrauliques (16, 17) sont disposés les uns derrière les autres dans la direction de déplacement des pistons (18, 19).

7. Dispositif de pompe selon la revendication 2, **caractérisé en ce que** le double piston est réalisé sous forme de piston étagé.

8. Dispositif de pompe selon l'une quelconque des revendications précédentes, **caractérisé en ce que** les chambres hydrauliques (16, 17) et/ou les raccords fluidiques (20-23) sont réalisés/disposés dans un boîtier de pompe (3) du dispositif de pompe (1).

9. Dispositif de pompe selon l'une quelconque des revendications précédentes, **caractérisé en ce que** les chambres hydrauliques (16, 17) et/ou les raccords fluidiques sont réalisés dans une pièce d'insertion (24) du dispositif de pompe (1) disposée dans le boîtier de pompe (3).

10. Dispositif de pompe selon l'une quelconque des revendications précédentes, **caractérisé en ce qu'**un dispositif de soupape (EV1, EV2, AV1, AV2), en particulier un clapet antiretour est associé à au moins l'un des raccords fluidiques (20-23).

11. Système de frein (2), en particulier pour un véhicule automobile, comprenant un dispositif de pompe (1) et comprenant au moins un circuit hydraulique connecté hydrauliquement au dispositif de pompe (1), qui présente à chaque fois au moins un frein de roue pouvant être commandé hydrauliquement, **caractérisé par** la réalisation du dispositif de pompe (1) selon l'une quelconque des revendications 1 à 10.
